# EUROPÄISCHE PATENTANMELDUNG

(11) **EP 1 323 513 A1**
(43) Veröffentlichungstag der Anmeldung: **02.07.2003**
(21) Anmeldenummer: 02025894.3
(22) Anmeldetag: 20.11.2002
(51) Int. Cl.: B29C 65/00

(54) **Flachdraht-Thermoelement**

(30) Priorität: 29.12.2001 DE 10164427
(71) Anmelder: Hydro Aluminium Deutschland GmbH, 53117 Bonn (DE)
(72) Erfinder: Lennarz, Michael, 53117 Bonn (DE); Schubert, Günter, 53359 Rheinbach (DE)
(74) Vertreter: Cohausz & Florack

(57) **Zusammenfassung**

Die Erfindung betrifft ein Thermoelement bestehend aus zwei Drähten aus verschiedenen Metallen oder Metalllegierungen, wobei die Drähte an einem Ende elektrisch leitend miteinander verbunden sind. Die Aufgabe ein mechanisch möglichst robustes Thermoelement zur Verfügung zu stellen, welches neben einer schnellen Ansprechzeit auch eine gute Positionierbarkeit gewährleistet, wird erfindungsgemäß dadurch gelöst, dass die Drähte zumindest im Messbereich einen nicht radialsymmetrischen Querschnitt aufweisen.

## Beschreibung

Die Erfindung betrifft ein Thermoelement bestehend aus zwei Drähten aus verschiedenen Metallen oder Metalllegierungen, wobei die Drähte an einem Ende elektrisch leitend miteinander verbunden sind.

Verbindet man zwei Drähte aus unterschiedlichen Metallen oder Legierungen elektrisch leitend miteinander, so kann infolge des thermoelektrischen Effekts eine elektrische Spannung an den nicht verbundenen Enden der Drähte gemessen werden, wenn die Verbindungsstelle der Drähte einer anderen Temperatur ausgesetzt ist als das offene Ende der Drähte. Derartig elektrisch leitend verbundene Drähte aus unterschiedlichen Metallen und Metalllegierungen werden allgemein als Thermoelemente bezeichnet und häufig zur Temperaturmessung eingesetzt. Durch die Verwendung spezieller Metalllegierungen kann in bestimmten Temperaturbereichen eine nahezu lineare Abhängigkeit der Thermospannung von der Temperaturdifferenz erreicht werden. Nichtlinearitäten lassen sich in bekannter Art und Weise kompensieren. Die Temperaturmessung ist dabei insbesondere von dem Transport der Wärme zur Verbindungsstelle der Drähte abhängig. Erst nach dem Erreichen des thermischen Gleichgewichts zwischen dem zu untersuchenden Körper und dem Messfühler, bei einem Thermoelement ist dies die Verbindungsstelle der Drähte, kann die tatsächliche Temperatur des Körpers ermittelt werden. Für Messaufgaben, bei denen es auf ein schnelles Ansprechen des Thermoelementes und eine kleine Bauform ankommt, werden daher sehr dünne Drähte eingesetzt. Dies gewährleistet, dass die Wärmekapazität des Thermoelementes selbst möglichst klein gehalten wird und damit die Ansprechzeit entsprechend kurz ausfällt.

Eine entsprechend kurze Ansprechzeit des Thermoelementes ist auch bei der Messung des zeitlichen Temperaturverlaufs in den Siegelnähten beim Heißsiegeln oder Verschweißen von Verpackungen aus thermoplastischem Kunststoff notwendig, da eine exakte Temperaturmessung und -führung in der Siegelnaht die Prozesssicherheit deutlich steigern kann. Dabei werden Thermoelemente mit sehr dünnen Runddrähten eingesetzt und über eine Zuführung an der Messposition zwischen den Siegelschichten positioniert.

Nachteilig bei der Verwendung von dünnen Runddrähten im Thermoelement ist jedoch, dass diese aufgrund der unvermeidbaren mechanischen Spannungen zwischen den Drähten zum Curlen, d.h. zum aufdrehen und verdrehen, neigen. Die Ursache ist in den radialsymmetrisch verteilten Biegemomenten der Drähte zu sehen, die eine bevorzugte Ausrichtung des Drähte verhindern. Eine genaue Positionierung des Thermoelementes, die allerdings entscheidend für die Güte der Temperaturmessung an exakt vorgegebenen Positionen ist, ist mit derart aufgebauten Thermoelementen nur sehr schwer möglich.

Der vorliegenden Erfindung liegt demnach die Aufgabe zugrunde, ein mechanisch möglichst robustes Thermoelement zur Verfügung zu stellen, welches neben einer schnellen Ansprechzeit auch eine gute Positionierbarkeit gewährleistet sowie eine Verwendung eines solchen Thermoelementes vorzuschlagen.

Die zuvor hergeleitete und aufgezeigte Aufgabe wird für ein Thermoelement der eingangs genannten Art dadurch gelöst, dass die Drähte zumindest im Messbereich einen nicht radialsymmetrischen Querschnitt aufweisen. Aufgrund unterschiedlicher Biegemomente in die verschiedenen Raumrichtungen wird ein Curlen des Drahtes wirkungsvoll verhindert, da die Drähte nun eine bevorzugte Biegerichtung aufweisen. Drähte mit einem nicht radialsymmetrischen Querschnitt weisen zusätzlich eine verbesserte Steifigkeit, Formstabilität und mechanische Belastbarkeit auf. Damit wird das Einbetten und Positionieren des Thermoelementes in dünne Schichten aus thermoplastischem Kunststoff wesentlich erleichtert. Darüber hinaus ist aufgrund der geringen Masse des Thermoelementes gleichzeitig eine schnelle Ansprechzeit gegeben.

Unter dem Messbereich des Thermoelements ist der Bereich zu verstehen, in dem die Thermoelementdrähte thermisch beeinflusst werden und in der Regel auch mechanisch beansprucht werden. Es handelt sich dabei also um den an den eigentlichen Punkt der elektrisch leitenden Verbindung anschließenden Bereich der Drähte. In diesem Bereich ist das Curlen besonders nachteilig, da gerade im Messbereich eine exakte Positionierung gewährleistet werden muss, um beispielsweise Mehrfachkontakte zu verhindern.

Dadurch, dass die Drähte zumindest im Messbereich als Flachdrähte ausgeführt sind, ist gemäß einer weitergebildeten Ausführungsform ein störungsfreier Schichtaufbau beim Heißsiegeln oder Verschweißen von Verpackungen aus thermoplastischem Kunststoff trotz Temperaturmessung möglich.

Gemäß einer bevorzugten Ausführungsform des erfindungsgemäßen Thermoelementes weisen die Flachdrähte eine Dicke von weniger als 50 µm, insbesondere 20 µm, auf. Die Messung des zeitlichen Verlaufs der Temperaturen in einer Siegelnaht während des Siegelvorganges kann aufgrund der sehr kleinen eigenen Wärmekapazität des Thermoelementes weiter verbessert werden, da der Heißsiegel- oder Verschweißprozess mit derartigen Thermoelementen nur minimal beeinflusst wird.

Die Positionierung des Thermoelementes kann dadurch weiter verbessert werden, dass die Drähte auch im Zuführungsbereich einen nicht radialsymmetrischen Querschnitt aufweisen. Ebenso wie im Messbereich neigen die Drähte auch im Zuführungsbereich zum Curlen, so dass bei Unterdrückung dieses Effektes die Positionierung der Thermoelemente zusätzlich verbessert werden kann.

Unter dem Zuführungsbereich der Drähte eines erfindungsgemäßen Thermoelementes ist der Bereich zu verstehen, der zwischen dem Messbereich und dem Übergang der Drähte auf separate Zuführungsdrähte, die in der Regel eine deutlich größeren Querschnitt aufweisen, liegt. Die separaten Zuführungsdrähte bestehen üblicherweise aus dem identischen Material wie die Drähte des eigentlichen Thermoelementes. Auch im Zuführungsbereich neigen radialsymmetrische Drähte zum Curlen, wodurch eine exakte Positionierung des Messbereiches erschwert wird.

Sind gemäß einer weitergebildeten Ausführungsform des erfindungsgemäßen Thermoelementes die Drähte auch im Zuführungsbereich als Flachdraht ausgebildet, kann die Güte der Temperaturmessung weiter gesteigert werden, da dann auch der Zuführungsbereich der Drähte einen störungsfreien Schichtaufbau der Siegelnaht beim Heißsiegeln oder Verschweißen gewährleistet.

Eine Anpassung des Thermoelementes an den jeweilig zu messenden Temperaturbereich wird beispielsweise dadurch erreicht, dass die Drähte aus Platin-Platinrhodium, Nickel-Chromnickel, Eisen-Konstantan oder Kupfer-Konstantan bestehen.

Wird das erfindungsgemäße Thermoelement zur Messung des Temperaturverlaufs in Siegelnähten beim Heißsiegeln oder Verschweißen von Verpackungen aus thermoplastischen Kunststoffen verwendet, so ist dabei gewährleistet, dass aufgrund der exakten Temperaturmessung ein optimaler zeitlicher Temperaturverlauf beim Heißsiegeln oder Verschweißen von Verpackungen gemessen und eingestellt werden kann. Beispielsweise kann die Qualität einer Heißsiegelnaht durch einen optimierten Temperaturverlauf signifikant gesteigert werden (vgl. hierzu DE 101 02 798 A1).

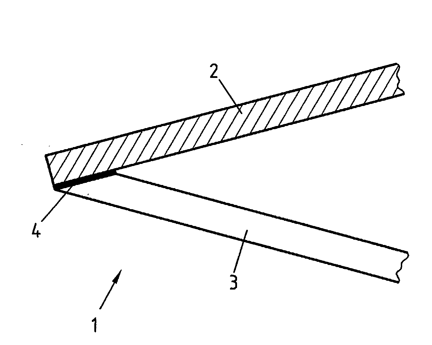

Es gibt nun eine Vielzahl von Möglichkeiten, das erfindungsgemäße Thermoelement auszugestalten und weiterzubilden. Hierzu wird beispielsweise verwiesen einerseits auf die dem Patentanspruch 1 nachgeordneten Patentansprüche, andererseits auf die Beschreibung eines Ausführungsbeispiels in Verbindung mit der Zeichnung.

In der Zeichnung zeigt die einzige Figur ein Ausführungsbeispiel eines erfindungsgemäßen Thermoelementes in einer Seitenansicht.

In der einzigen Figur ist ein erfindungsgemäßes Thermoelement 1 bestehend aus zwei verschiedenen Drähten 2,3, die mit einem Schweißpunkt 4 miteinander verbunden sind, in einer Seitenansicht dargestellt. Dabei besteht beispielsweise bei einem Eisen-Konstantan-Thermoelement der Draht 2 aus reinem Eisen und der Draht 3 aus einer Kupfer-Nickellegierung, wobei der Nickelanteil 45 % beträgt. Mit einem derartig aufgebauten Thermoelement können Temperaturen im Bereich von - 200 °C bis 700 °C gemessen werden.

Die eigentliche Temperaturmessung bzw. die Erzeugung der Thermospannung geschieht dabei an der Verbindungsstelle der Drähte, welche hier als Schweißpunkt 4 ausgeführt ist. Aufgrund der dünnen Ausführung der Drähte 2 und 3 ist die eigene Wärmekapazität der Drähte sehr gering. Das thermische Gleichgewicht mit dem zu messenden Körper wird daher nahezu instantan erreicht. Zusätzlich weisen die als Flachdrähte ausgebildeten Drähte 2 und 3 einwesentlich größeres Biegemomente parallel zur Flachbandebene als senkrecht zur Flachbandebene auf. Die Drähte weisen damit eine bevorzugte Biegerichtung auf, so dass ein Curlen des Thermoelementdrahtes wirkungsvoll unterdrückt und die Handhabung der Thermoelemente erheblich erleichtert werden kann. Zumeist werden die Drähte 2,3 über separate in der Zeichnung nicht dargestellte Zuführungsdrähte mit den Messinstrumenten verbunden.

Aus der einzigen Figur ist ersichtlich, dass die Drähte 2,3 eine Winkel von etwa 30° miteinander einschließen. Dass die Drähte 2,3 einen derartigen Winkel größer als 0° miteinander einschließen, sorgt in Verbindung mit der Tatsache, dass die erfindungsgemäßen Drähte 2,3 nicht zum Curlen neigen, dafür, dass außer dem Schweißpunkt 4 keine weiteren Kontaktpunkte zwischen den Drähten 2,3 zustande kommen.

## Patentansprüche

1. Thermoelement (1) bestehend aus zwei Drähten (2,3) aus verschiedenen Metallen oder Metalllegierungen, wobei die Drähte (2,3) an einem Ende elektrisch leitend miteinander verbunden sind,
**dadurch gekennzeichnet, dass** die Drähte (2,3) zumindest im Messbereich einen nicht radialsymmetrischen Querschnitt aufweisen.

2. Thermoelement nach Anspruch 1,
**dadurch gekennzeichnet, dass** die Drähte (2,3) zumindest im Messbereich als Flachdrähte ausgeführt sind.

3. Thermoelement nach Anspruch 2,
**dadurch gekennzeichnet, dass** die Flachdrähte eine Dicke von weniger als 50 µm, insbesondere 20 µm, aufweisen.

4. Thermoelement nach einem der Ansprüche 1 bis 3,
**dadurch gekennzeichnet, dass** die Drähte (2,3) im Zuführungsbereich einen nicht radialsymmetrischen Querschnitt aufweisen.

5. Thermoelement nach Anspruch 4,
**dadurch gekennzeichnet, dass** die Drähte (2,3) im Zuführungsbereich aus Flachdraht hergestellt ist.

6. Thermoelement nach einem der Ansprüche 1 bis 5,
**dadurch gekennzeichnet, dass** die Drähte (2,3) aus Platin-Platinrhodium, Nickel-Chromnickel, Eisen-Konstantan oder Kupfer-Konstantan bestehen.

7. Verwendung eines Thermoelementes nach einem der Ansprüche 1 bis 6 zur Messung des zeitlichen Temperaturverlaufs in Siegelnähten beim Heißsiegeln oder Verschweißen von Verpackungen aus thermoplastischem Kunststoffen.
